(19) Europäisches Patentamt
European Patent Office
Office européen des brevets

(11) EP 2 924 062 B1

(12) EUROPÄISCHE PATENTSCHRIFT

(45) Veröffentlichungstag und Bekanntmachung des Hinweises auf die Patenterteilung:
**13.02.2019 Patentblatt 2019/07**

(51) Int Cl.:
***C08K 3/00*** *(2018.01)* ***C08K 3/34*** *(2006.01)*
***C08K 3/38*** *(2006.01)* *C08K 3/22* *(2006.01)*
*C08K 3/28* *(2006.01)*

(21) Anmeldenummer: **14161895.9**

(22) Anmeldetag: **27.03.2014**

# (54) Flammwidrige Polyamidzusammensetzungen

Flame retardant polyamide compositions

Compositions de polyamide ininflammables

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**30.09.2015 Patentblatt 2015/40**

(73) Patentinhaber: **LANXESS Deutschland GmbH**
**50569 Köln (DE)**

(72) Erfinder:
- **Endtner Jochen, Dr.**
  **50679 Köln (DE)**
- **Bienmüller Matthias, Dr.**
  **47803 Krefeld (DE)**

(56) Entgegenhaltungen:
**EP-A1- 2 862 894**
**WO-A1-2013/045426**
**US-A- 4 399 246**
**US-A1- 2006 189 747**
**US-A1- 2011 103 021**

- **DATABASE WPI Week 201428 Thomson Scientific, London, GB; AN 2013-V80046 XP002729043, -& CN 103 304 992 A (CIXI JINDAO PLASTIC CO LTD) 18. September 2013 (2013-09-18)**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 924 062 B1

**Beschreibung**

Die vorliegende Erfindung betrifft Polyamid basierte Zusammensetzungen mit mindestens einem Füllstoff aus der Gruppe Aluminiumoxid, Bornitrid und Aluminiumsilikat sowie die Verwendung dieser Zusammensetzungen zur Herstellung von Erzeugnissen mit erhöhten Flammschutzanforderungen, besonders bevorzugt von Erzeugnissen mit erhöhten Glühdrahtanforderungen, insbesondere von Komponenten für strom- und spannungsführende Bauteile in Haushaltsgeräten.

Polyamid Zusammensetzungen werden unter anderem aufgrund ihrer hervorragenden Eigenschaften bezüglich Festigkeit, Zähigkeit, Verarbeitbarkeit und ihrer sehr guten Beständigkeit gegen Lösungsmittel in vielfältigen Anwendungen, vom Automobilsektor bis hin zum Elektro- und Elektronikbereich, eingesetzt. Gerade im Elektro- und Elektronikbereich bestehen aufgrund der erhöhten Entflammungsrisiken, ausgelöst beispielweise durch Kurzschlüsse, Lichtbögen oder beschädigte Leitungen, oft erhöhte Anforderungen hinsichtlich der Flammwidrigkeit der in diesen Anwendungen eingesetzten nichtmetallischen, isolierenden Materialien, Werkstoffe oder Erzeugnisse.

Insbesondere für strom- und spannungsführende Komponenten in Haushaltsgeräten müssen die dafür eingesetzten nichtmetallischen, isolierenden Materialien die normativen Anforderungen hinsichtlich ihrer Feuerbeständigkeit nach IEC60335-1 erfüllen, wenn der Abstand des Materials zu stromführenden Teilen 3 mm unterschreitet (siehe hierzu Plastverarbeiter, 56. Jahrg., 2005, Nr. 4, 66 - 67).

In beaufsichtigten Haushaltsgeräten mit Strömen oberhalb 0,5 A müssen die nichtmetallischen, isolierenden Werkstoffe bzw. die daraus gefertigten Erzeugnisse einen GWFI (Glow Wire Flammability Index = IEC60695-2-12) von mindestens 750°C erzielen. Der GWFI wird nach IEC60695-2-12 an einer Prüfplatte (Rundscheibe) gemessen und ist ein Maß für das Selbstverlöschungsverhalten einer Probe bei Einwirkung eines glühenden Drahtes. Der Probekörper wird 30 Sekunden lang mit einer Kraft von einem Newton gegen einen aufgeheizten Glühdraht gepresst. Die Eindringtiefe des Glühdrahtes ist auf 7 mm begrenzt. Der Test ist bestanden, wenn der Probekörper nach Entfernen des Glühdrahtes weniger als 30 Sekunden nachbrennt und wenn sich ein unter dem Probekörper liegendes Seidenpapier nicht entzündet.

Hohe bzw. erhöhte Flammschutzanforderungen im Sinne der vorliegenden Erfindung sind daher ein GWFI $\geq$ 750°C, wobei dieser Parameter nach IEC60695-2-12 bestimmt wird. Erfüllt ein zu untersuchender Werkstoff bzw. ein zu untersuchendes Erzeugnis diese Bedingung gemäß IEC 60695-2-12 nicht, kann keine entsprechende Zulassung erfolgen.

Alternativ kann das zu untersuchende Erzeugnis auch einem GWT Test (Glow Wire Temperature Test = IEC60695-2-11) unterzogen werden. Für beaufsichtigte Haushaltsgeräte mit Strömen oberhalb 0,5 A muss für die nichtmetallischen, isolierenden Werkstoffe in diesem Fall ein GWT von mindestens 750°C bestanden werden. Ergänzend sei angemerkt, dass für im Falle von unbeaufsichtigten Haushaltsgeräte auch die Glühdrahtentzündlichkeit eine Rolle spielt. Diese kann z.B. nach IEC60695-2-13 an einer Prüfplatte bestimmt werden.

Aufgrund ihrer chemischen Zusammensetzung sind viele Kunststoffe, wie zum Beispiel Polyamid, leicht brennbar. Um die von Kunststoffverarbeitern und teilweise vom Gesetzgeber geforderten hohen Flammschutzanforderungen erreichen zu können, werden Kunststoffe daher in der Regel mit Flammschutzmitteln ausgerüstet. Für Polyamide kommen dabei halogenhaltige Flammschutzmittel wie z.B. bromierte Polystyrole oder Decabromdiphenylethan in Frage, die meistens in Kombination mit einem Flammschutzsynergisten wie z.B. Antimontrioxid eingesetzt werden.

Unter den nicht-halogenierten Flammschutzmitteln werden für Polyamide häufig stickstoffhaltige Derivate, insbesondere Melamincyanurat, Wasser freisetzende Verbindungen, insbesondere Magnesiumhydroxid oder phosphorhaltige Komponenten, insbesondere roter Phosphor, Melaminpolyphosphat oder die Salze der Phosphinsäuren (Phosphinate) verwendet (DE-A-2 252 258 und DE-A-2 447 727).

Nachteilig an der Verwendung dieser Flammschutzmittel ist insbesondere deren systembedingt niedrige Zersetzungstemperatur und damit einhergehend ein kleines Verarbeitungsfenster solcher Flammschutzmittel enthaltender Formmassen in der Compoundierung, im Spritzguss oder in der Extrusion. Compoundierung (aus dem Englischen: *Compound* = "Mischung") ist ein Begriff aus der Kunststofftechnik, welcher mit Kunststoffaufbereitung gleichzusetzen ist und den Veredelungsprozess von Kunststoffen durch Beimischung von Zuschlagstoffen (Füllstoffe, Additive usw.) zur gezielten Optimierung der Eigenschaftsprofile beschreibt. Die Compoundierung erfolgt vorzugsweise in Extrudern, besonders bevorzugt in gleichläufigen Doppelschneckenextrudern, gegenläufigen Doppelschneckenextrudern, durch Planetwalzenextruder oder Ko-Kneter, und umfasst die Verfahrensoperationen Fördern, Aufschmelzen, Dispergieren, Mischen, Entgasen und Druckaufbau.

So kann es beim Verarbeiten bzw. Compoundieren des halogenfreien Flammschutzmittels Melamincyanurat in Polyamiden schon bei Temperaturen oberhalb von 290°C zu Zersetzungserscheinungen der einzusetzenden Zusammensetzungen mit ungünstigen Auswirkungen wie Belagsbildung und Aufschäumen kommen.

Analog dazu ist die großtechnische Einsetzbarkeit des halogenfreien Flammschutzmittels Magnesiumhydroxid oft auf niedrigschmelzende Polyamide, wie z.B. Polyamid 6, beschränkt. Ein weiterer Nachteil speziell von Magnesiumhydroxid wird in den negativen Auswirkungen auf mechanische Eigenschaften, wie insbesondere die Schlagzähigkeit und die Randfaserdehnung, der aus Magnesiumhydroxid additivierten Polyamid Zusammensetzungen erhältlichen Erzeugnisse gesehen.

Auch bei der Verwendung von phosphinathaltigen Flammschutzmitteln wurden insbesondere bei Verarbeitungstemperaturen oberhalb 300°C teilweise Polymerabbau, Verfärbungen des Polymers und Rauchentwicklung bei der Verarbeitung beobachtet. Diese Schwierigkeiten ließen sich jedoch durch Zusatz kleiner Mengen basischer oder amphoterer Oxide, Hydroxide, Carbonate, Silikate, Borate oder Stannate eindämmen (WO-A 2004/022640).

Unabhängig von verarbeitungstechnischen Fragen sind etliche üblicherweise verwendete Flammschutzmittel auch aus ökologischen Gründen in der Diskussion. So können sich einige halogenhaltige Flammschutzmittel bei Eintrag in die Umwelt aufgrund ihrer hohen Persistenz in Organismen anreichern. Bei halogenfreien Flammschutzmitteln auf Phosphorbasis ist u.a. die energieintensive Herstellung von Nachteil.

Aufgabe der vorliegenden Erfindung war es deshalb, Polyamid basierte Zusammensetzungen für die Verwendung in Anwendungen mit erhöhten Flammschutzanforderungen, insbesondere den Anforderungen nach IEC60335-1, zur Verfügung zu stellen, welche vorzugsweise ohne zusätzliche Flammschutzmittel auf Basis halogen-, stickstoff- oder phosphorhaltiger organischer Verbindungen bzw. rotem Phosphor die oben beschriebenen erhöhten Flammschutzanforderungen erfüllen.

Überraschend wurde nun gefunden, dass Polyamid basierte Zusammensetzungen und daraus gefertigte Erzeugnisse, die wenigstens einen elektrisch isolierenden thermisch leitfähigen Füllstoff aus dem Mineral Kyanit mit der chemischen Zusammensetzung $Al_2[O\ SiO_4]$, enthalten, erhöhte Flammschutzanforderungen, insbesondere eine erhöhte Glühdrahtbeständigkeit, erfüllen, ohne dass dabei die beim Einsatz von Flammschutzmitteln üblichen Einschränkungen hinsichtlich Verarbeitungsfenster oder Ökologie in Kauf genommen werden müssen.

Lösung der Aufgabe und somit Gegenstand der Erfindung sind deshalb Zusammensetzungen enthaltend

a) wenigstens ein Polyamid und

b) wenigstens einen elektrisch isolierenden, thermisch leitfähigen Füllstoff ausgewählt aus dem Mineral Kyanit mit der chemischen Zusammensetzung $Al_2[O\ SiO_4]$, und zusätzlich noch wenigstens ein Flammschutzmittel.

Zur Klarstellung sei angemerkt, dass vom Rahmen der vorliegenden Erfindung alle nachfolgend aufgeführten allgemeinen oder in Vorzugsbereichen genannten Definitionen und Parameter in beliebigen Kombinationen umfasst sind.

Bevorzugter Gegenstand der vorliegenden Erfindung sind Zusammensetzungen enthaltend

a) 20 bis 90 Gew.-%, bevorzugt 30 bis 70 Gew.-% wenigstens eines Polyamids und

b) 10 bis 80 Gew.-%, bevorzugt 15 bis 75 Gew.-%, besonders bevorzugt 30 bis 70 Gew.-% wenigstens eines elektrisch isolierenden, thermisch leitfähigen Füllstoffs ausgewählt aus dem Mineral Kyanit mit der chemischen Zusammensetzung $Al_2[O\ SiO_4]$,

wobei die Summe aller Gewichtsprozente stets 100 ergibt und diese zusätzlich noch e) 1 bis 40 Gew.-% wenigstens eines Flammschutzmittels enthalten, wobei die übrigen Komponenten soweit reduziert werden, dass die Summe aller Gewichtsprozente stets 100 ergibt.

Die Zubereitung der erfindungsgemäßen Zusammensetzungen für eine weitere Nutzung erfolgt durch Mischen der als Edukte einzusetzenden Komponenten a) und b) in wenigstens einem Mischwerkzeug. Hierdurch werden als Zwischenprodukte, auf den erfindungsgemäßen Zusammensetzungen basierende, Formmassen erhalten. Diese Formmassen können entweder ausschließlich aus den Komponenten a) und b) bestehen, oder aber zusätzlich zu den Komponenten a) und b) noch weitere Komponenten enthalten. In diesem Fall sind die Komponenten a) und b) im Rahmen der angegebenen Mengenbereiche so zu variieren, dass die Summe aller Gewichtsprozente stets 100 ergibt.

In einer Ausführungsform betrifft die vorliegende Erfindung Zusammensetzungen enthaltend zusätzlich zu den Komponenten a) und b) noch

c) 5 bis 70 Gew.-%, bevorzugt 10 bis 45 Gew.-%, besonders bevorzugt 15 bis 35 Gew.-%, jeweils bezogen auf die Gesamtzusammensetzung Glasfasern, wobei die übrigen Komponenten soweit reduziert werden, dass die Summe aller Gewichtsprozente stets 100 ergibt.

In einer Ausführungsform betrifft die vorliegende Erfindung Zusammensetzungen enthaltend zusätzlich zu den Komponenten a) bis c), oder anstelle der Komponente c) noch

d) 0,01 bis 3 Gew.-%, bevorzugt 0,05 bis 1,5 Gew-%, besonders bevorzugt 0,1 bis 0,8 Gew.-%, jeweils bezogen auf die Gesamtzusammensetzung, wenigstens eines Thermostabilisators, wobei die übrigen Komponenten soweit reduziert werden, dass die Summe aller Gewichtsprozente stets 100 ergibt.

In einer Ausführungsform betrifft die vorliegende Erfindung Zusammensetzungen enthaltend zusätzlich zu den

Komponenten a) bis d) oder anstelle von c) und/oder d) um die Flammschutzwirkung zu steigern noch

e) 1 bis 40 Gew.-%, bevorzugt 2 bis 30 Gew.-%, besonders bevorzugt 5 bis 20 Gew.-%, jeweils bezogen auf die Gesamtzusammensetzung, wenigstens eines Flammschutzmittels, wobei die übrigen Komponenten soweit reduziert werden, dass die Summe aller Gewichtsprozente stets 100 ergibt.

In einer Ausführungsform betrifft die vorliegende Erfindung Zusammensetzungen enthaltend zusätzlich zu den Komponenten a) bis e) oder anstelle von c) und/oder d) und/oder e) noch

f) 0,01 bis 20 Gew.-%, bevorzugt 0,01 bis 10 Gew.-%, besonders bevorzugt 0,01 bis 5 Gew.-%, jeweils bezogen auf die Gesamtzusammensetzung, wenigstens eines sonstigen, von den Komponenten b) bis e) unterschiedlichen Additivs, wobei die übrigen Komponenten soweit reduziert werden, dass die Summe aller Gewichtsprozente stets 100 ergibt.

**Komponente a)**

Die als Komponente a) einzusetzenden Polyamide sind bevorzugt amorphe oder semikristalline Polyamide. Besonders bevorzugt sind semikristalline Polyamide mit einem Schmelzpunkt von mindestens 180 °C oder amorphe Polyamide mit einer Glasübergangstemperatur von mindestens 150 °C.

Semikristalline Polyamide besitzen gemäß DE 10 2011 084 519 A1 eine Schmelzenthalpie von 4 bis 25 J/g, gemessen mit der DSC-Methode gemäß ISO 11357 beim 2. Aufheizen und Integration des Schmelzpeaks. Im Gegensatz dazu besitzen amorphe Polyamide eine Schmelzenthalpie von weniger als 4 J/g, gemessen mit der DSC-Methode gemäß ISO 11357 beim 2. Aufheizen und Integration des Schmelzpeaks.

In einer bevorzugten Ausführungsform wird als Komponente a) auch ein Blend unterschiedlicher Polyamide eingesetzt.

Bevorzugt wird als Komponente a) aliphatisches Polyamid, besonders bevorzugt Polyamid 6 (PA 6), Polyamid 4.6 (PA 46) bzw. Polyamid 66 (PA 66) oder semi-aromatisches Polyamid, besonders bevorzugt PA 6T/6 und PA 6T/66, oder ein Co-Polyamid von PA 6 oder PA 66 eingesetzt. Ganz besonders bevorzugt wird PA 6 oder PA 66 eingesetzt. Insbesondere bevorzugt wird PA 6 eingesetzt.

Die im Rahmen der vorliegenden Anmeldung benutzte Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl angegeben, wie im Falle des PA 6, so bedeutet dies, dass von einer $\alpha,\omega$-Aminocarbonsäure bzw. von dem davon abgeleiteten Lactam, im Falle des PA 6 also dem $\varepsilon$-Caprolactam, ausgegangen worden ist; im Übrigen sei verwiesen auf H. Domininghaus, Die Kunststoffe und ihre Eigenschaften, Seiten 272 ff., VDI-Verlag, 1976.

Bevorzugt weist das als Komponente a) einzusetzende Polyamid eine Viskositätszahl bestimmt in einer 0,5 gew.-%igen Lösung in 96 gew.-%iger Schwefelsäure bei 25 °C gemäß ISO 307 im Bereich von 80 bis 180 ml/g, besonders bevorzugt im Bereich von 90 bis 170 ml/g, ganz besonders bevorzugt im Bereich von 95 bis 160 ml/g.

In einer besonders bevorzugten Ausführungsform weist das als Komponente a) einzusetzende Polyamid 6 eine Viskositätszahl bestimmt in einer 0,5 gew.-%igen Lösung in 96 gew.-%iger Schwefelsäure bei 25 °C gemäß ISO 307 im Bereich von 100 bis 135 ml/g auf.

Die Viskositätszahl ist die kennzeichnende Größe für die mittlere Molmasse (Molekülkettenlänge) und wird durch den K-Wert ausgedrückt. Der K-Wert wird nach einer im Jahre 1929 von Fikentscher angegebenen Gleichung (siehe: http://de.wikipedia.org/wiki/K-Wert_nach_Fikentscher) aus dem Viskositätsverhältnis berechnet. Letzteres ist die experimentelle Grundlage für die Berechnung von Viskositätszahlen. Die Rangfolge einer Gruppe von Produkten in Bezug auf die Kennzeichnung der Molmasse ist also bei K-Wert und Viskositätszahl gleich. Umrechnungstabellen für die Viskositätszahl und den K-Wert finden sich in der EN ISO 1628-2.

Die in den erfindungsgemäßen Zusammensetzungen als Komponente a) einzusetzenden Polyamide können nach verschiedenen Verfahren hergestellt werden und aus unterschiedlichen Bausteinen synthetisiert werden. Zur Herstellung von Polyamiden sind eine Vielzahl von Verfahrensweisen bekannt, wobei je nach gewünschtem Endprodukt unterschiedliche Monomerbausteine sowie verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung der erfindungsgemäß als Komponente a) einzusetzenden Polyamide verlaufen meist über die Polykondensation in der Schmelze. Im Rahmen der vorliegenden Erfindung wird auch die hydrolytische Polymerisation von Lactamen als Polykondensation verstanden.

Erfindungsgemäß als Komponente a) bevorzugt einzusetzende Polyamide sind solche, die ausgehend von Diaminen und Dicarbonsäuren und/oder Lactamen mit wenigstens 5 Ringgliedern oder entsprechenden Aminosäuren hergestellt werden. Als Edukte kommen bevorzugt aliphatische und/oder aromatische Dicarbonsäuren, besonders bevorzugt Adipinsäure, 2,2,4-Trimethyladipinsäure, 2,4,4-Trimethyladipinsäure, Azelainsäure, Sebazinsäure, Isophthalsäure, Terephthalsäure, aliphatische und/oder aromatische Diamine, besonders bevorzugt Tetramethylendiamin, Hexamethylendiamin, 2-Methylpentan-1,5-diamin, 1,9-Nonandiamin, 2,2,4- und 2,4,4-Trimethylhexamethylendiamin, die Isomeren Diaminodicyclohexylmethan, Diaminodicyclohexylpropan, Bis-aminomethylcyclohexan, Phenylendiamin, Xylylendiamin, Aminocarbonsäuren, insbesondere Aminocapronsäure, oder die entsprechenden Lactame in Betracht. Copolyamide aus mehreren der genannten Monomeren sind eingeschlossen.
Erfindungsgemäß besonders bevorzugt als Komponente a) einzusetzende Polyamide werden aus Caprolactam, ganz besonders bevorzugt aus ε-Caprolactam hergestellt.
Insbesondere bevorzugt sind weiterhin die meisten auf PA 6, PA 66 und andere auf aliphatischen oder/und aromatischen Polyamiden bzw. Copolyamiden basierende Compounds, bei denen auf eine Polyamidgruppe in der Polymerkette 3 bis 11 Methylengruppen kommen.

**Komponente b)**

Das einzusetzende Mineral Kyanit [CAS No. 1302-76-7] ist ein in trikliner Kristallform anfallendes Aluminiumsilikat mit der chemischen Zusammensetzung $Al_2[O\ SiO_4]$. Kyanit kann mit Eisen- und Chrom-Verbindungen verunreinigt sein. Erfindungsgemäß bevorzugt wird das trikline Aluminiumsilikat bzw. Kyanit mit weniger als 1 Gew.-%, besonders bevorzugt mit weniger als 0,5 Gew.-% Verunreinigungen eingesetzt.

Bevorzugt wird das $Al_2[O\ SiO_4]$ bzw. Kyanit, als Pulver eingesetzt. Bevorzugte Kyanit Pulver weisen eine mittlere Partikelgröße $d_{50}$ von maximal 500 µm, bevorzugt eine mittlere Partikelgröße im Bereich von 0,1 bis 250 µm, besonders bevorzugt im Bereich von 0,5 bis 150 µm, ganz besonders bevorzugt im Bereich von 0,5 bis 70 µm auf (gemäß ASTM D 1921-89, Methode A), wodurch die feine Verteilung in den aus den erfindungsgemäßen Zusammensetzungen erhältlichen Formmassen und den daraus herzustellenden Erzeugnissen gewährleistet wird.

Die erfindungsgemäß bevorzugt zu verwendenden $Al_2[O\ SiO_4]$ -Partikel bzw. Kyanit-Partikel können in unterschiedlichen Formen vorliegen, die durch das Aspektverhältnis beschrieben werden. Bevorzugt werden Kyanit Partikel mit einem Aspektverhältnis im Bereich von 1 bis 100, besonders bevorzugt im Bereich von 1 bis 30, ganz besonders bevorzugt im Bereich von 1 bis 10 eingesetzt.

Die erfindungsgemäß als b) zu verwendenden $Al_2[O\ SiO_4]$-Partikel, bzw. Kyanit-Partikel, können mit und/oder ohne Oberflächenmodifizierung eingesetzt werden. Als Oberflächenmodifizierung werden organische Kopplungsmittel bezeichnet, welche die Anbindung der Partikel an die thermoplastische Matrix verbessern sollen. Als Oberflächenmodifizierung werden bevorzugt Aminosilane oder Epoxysilane eingesetzt. In einer besonders bevorzugten Ausführungsform werden die erfindungsgemäß zu verwendenden $Al_2[O\ SiO_4]$-Partikel, bzw. Kyanit-Partikel, ohne Oberflächenmodifizierung eingesetzt. Anbieter von Kyanit ist beispielsweise Quarzwerke GmbH, Frechen, die das Kyanit als $Al_2[O\ SiO_4]$ unter Silatherm® vertreiben.

Gemäß "http://de.wikipedia.org/wiki/Faser-Kunststoff-Verbund" unterscheidet man geschnittene Fasern, auch als Kurzfasern bezeichnet, mit einer Länge im Bereich von 0,1 bis 1 mm, Langfasern mit einer Länge im Bereich von 1 bis 50 mm und Endlosfasern mit einer Länge L > 50 mm. Kurzfasern werden in der Spritzgusstechnik eingesetzt und können direkt mit einem Extruder verarbeitet werden. Langfasern können ebenfalls noch in Extrudern verarbeitet werden. Sie finden im großen Umfang Einsatz beim Faserspritzen. Langfasern werden häufig Duroplasten als Füllstoff zugemischt. Endlosfasern werden als Rovings oder Gewebe in faserverstärkten Kunststoffen eingesetzt. Erzeugnisse mit Endlosfasern erzielen die höchsten Steifigkeits- und Festigkeitswerte. Im Glasmehl liegt die Faserlänge im Bereich von 70 bis 200 µm.

Erfindungsgemäß können Kurzglasfasern, Langglasfasern oder Endlosglasfasern eingesetzt werden. Bevorzugt werden Langglasfasern oder Endlosglasfasern eingesetzt, besonders bevorzugt Langglasfasern. Die Glasfasern können aber auch als gemahlene Glasfasern eingesetzt werden.

Die Glasfasern haben bevorzugt einen Faserdurchmesser im Bereich von 7 und 18 µm, besonders bevorzugt im Bereich von 9 und 15 µm

Die als Komponente c) einzusetzenden Glasfasern werden bevorzugt mit einem geeigneten Schlichtesystem bzw. einem Haftvermittler bzw. Haftvermittlersystem, besonders bevorzugt auf Silanbasis, ausgerüstet.

Ganz besonders bevorzugte Haftvermittler auf Silanbasis sind Silanverbindungen der allgemeinen Formel (I)

$$(X\text{-}(CH_2)_q)k\text{-}Si\text{-}(O\text{-}CrH_2r\text{+}1)_4\text{-}k \qquad (I)$$

in der die Substituenten folgende Bedeutung haben:

X: $NH_2$-, HO-,

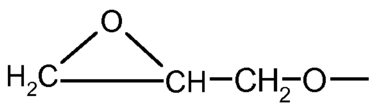

q: eine ganze Zahl von 2 bis 10, bevorzugt 3 bis 4,

r: eine ganze Zahl von 1 bis 5, bevorzugt 1 bis 2,

k: eine ganze Zahl von 1 bis 3, bevorzugt 1.

Insbesondere bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Für die Ausrüstung der als Komponente c) einzusetzenden Glasfasern werden die Silanverbindungen bevorzugt in Mengen im Bereich von 0,05 bis 2 Gew.-%, besonders bevorzugt im Bereich von 0,25 bis 1,5 Gew.-% und insbesondere im Bereich von 0,5 bis 1 Gew.-%, bezogen auf die Glasfasermenge, zur Oberflächenbeschichtung eingesetzt.

Die Glasfasern können bedingt durch die Verarbeitung/ das Compoundieren zur Formmasse bzw. dem daraus herzustellenden Erzeugnis in der Formmasse bzw. im Erzeugnis einen kleineren d97- bzw. d50-Wert aufweisen, als die ursprünglich eingesetzten Glasfasern. Die Glasfasern können bedingt durch die Verarbeitung zur Formmasse (Compoundierung) bzw. Formkörper (Spritzguss oder Extrusion) in der Formmasse bzw. im Formkörper kürzere Längenverteilungen als ursprünglich eingesetzt aufweisen.

**Komponente d)**

Bevorzugt als Komponente d) einzusetzende Thermostabilisatoren werden ausgewählt aus der Gruppe der sterisch gehinderten Phenole, wobei es sich um Verbindungen mit phenolischer Struktur handelt, die am phenolischen Ring mindestens eine sterisch anspruchsvolle Gruppe aufweisen. Besonders bevorzugte sterisch gehinderte Phenole sind Verbindungen der Formel (II),

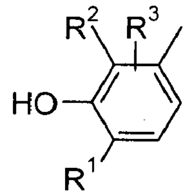
(II)

worin $R^1$ und $R^2$ für eine Alkylgruppe, für eine substituierte Alkylgruppe oder für eine substituierte Triazolgruppe stehen, wobei die Reste $R^1$ und $R^2$ gleich oder verschieden sein können und $R^3$ für eine Alkylgruppe, für eine substituierte Alkylgruppe, für eine Alkoxygruppe oder für eine substituierte Aminogruppe steht.

Gemäß "http://de.wikipedia.org/wiki/Sterische_Hinderung" bezeichnet eine sterische Hinderung in der organischen Chemie den Einfluss der räumlichen Ausdehnung eines Moleküls auf den Verlauf einer Reaktion. Der Begriff wurde erstmals 1894 von Victor Meyer für die Beobachtung geprägt, dass manche Reaktionen nur sehr langsam oder gar nicht ablaufen, wenn sich in der Umgebung der reagierenden Atome große und raumerfüllende Gruppen befinden. Ein bekanntes Beispiel für den Einfluss der sterischen Hinderung oder einer sterisch anspruchsvollen Gruppe ist die Anwesenheit von sehr raumerfüllenden *tert*-butyl-Gruppen.

Ganz besonders bevorzugte Thermostabilisatorn der Formel (II) werden als Antioxidantien beispielsweise in der DE-A 27 02 661 beschrieben, deren Inhalt von der vorliegenden Anmeldung vollumfänglich umfasst wird.

Eine weitere Gruppe bevorzugter sterisch gehinderter Phenole leitet sich von substituierten Benzolcarbonsäuren ab, insbesondere von substituierten Benzolpropionsäuren. Besonders bevorzugte Verbindungen aus dieser Klasse sind Verbindungen der Formel (III)

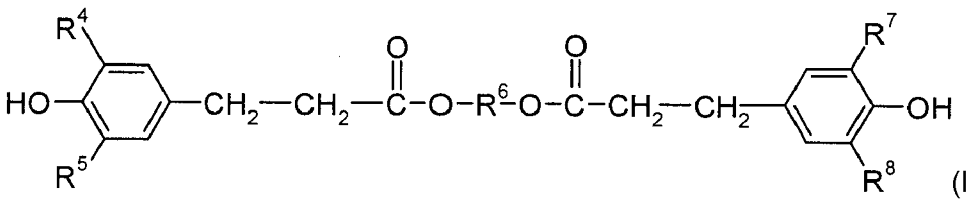

(III)

worin $R^4$, $R^5$, $R^7$ und $R^8$ unabhängig voneinander $C_1$-$C_8$-Alkylgruppen darstellen, die ihrerseits substituiert sein können und wovon mindestens eine davon eine sterisch anspruchsvolle Gruppe ist, und $R^6$ einen zweiwertigen aliphatischen Rest mit 1 bis 10 C-Atomen bedeutet, der in der Hauptkette auch C-O-Bindungen aufweisen kann.

Besonders bevorzugte Verbindungen der Formel (III) sind Verbindungen der Formeln (IV), (V) und (VI).

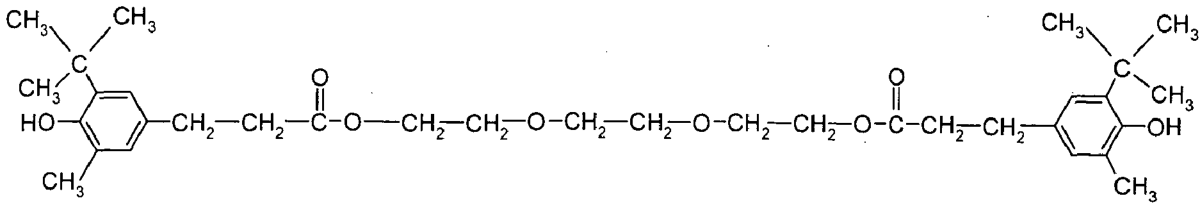

(IV) (Irganox® 245 der Firma BASF SE)

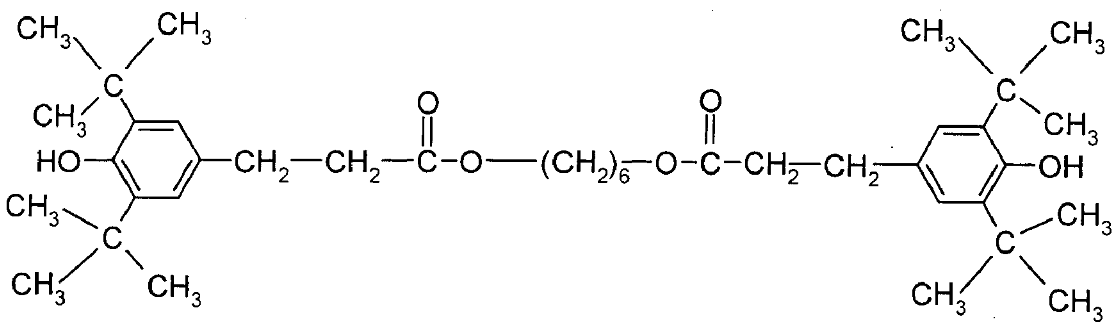

(V) (Irganox® 259 der Firma BASF SE)

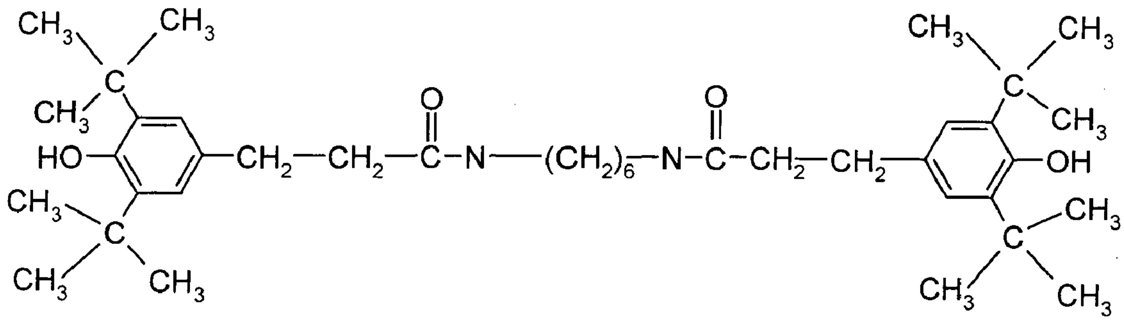

(VI) (Irganox® 1098 der Firma BASF SE)

Ganz besonders bevorzugte Thermostabilisatoren werden ausgewählt aus der Gruppe 2,2'-Methylen-bis-(4-methyl-6-tert.-butylphenol), 1,6-Hexandiol-bis[3-(3,5-di-tert.-butyl-4-hydroxyphenyl)-propionat], Pentaerythril-tetrakis-[3-(3,5-di-tert.-butyl-4-hydroxyphenyl)-proprionat], Distearyl-3,5-di-tert.-butyl-4-hydroxybenzylphosphonat, 2,6,7-Trioxa-1-phos-phabicyclo-[2.2.2]oct-4-yl-methyl-3,5-di-tert.-butyl-4-hydroxyhydrocinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyldimethylamin.

Insbesondere bevorzugte Thermostabilisatoren werden ausgewählt aus der Gruppe 2,2'-Methylen-bis-(4-methyl-6-tert.-butylphenol), 1,6-Hexandiol-bis-(3,5-di-tert.-butyl-4-hydroxyphenyl]-propionat (Irganox® 259), Pentaerythrityl-tetrakis-[3-(3,5-di-tert.-butyl-4-hydroxyphenyl)-propionat] sowie N,N'-Hexamethylen-bis-3,5-di-tert.-butyl-4-hydroxyhydrocinnamid (Irganox® 1098) und das vorstehend beschriebene Irganox® 245 der Firma BASF SE, Ludwigshafen, Deutschland.

Erfindungsgemäß insbesondere ganz besonders bevorzugt wird N,N'-Hexamethylen-bis-3,5-di-tert.-butyl-4-hydroxyhydrocinnamid, [CAS No. 23128-74-7], als Thermostabilisator eingesetzt, das als Irganox® 1098 bei der BASF SE, Ludwigshafen, Deutschland erhältlich ist.

**Komponente e)**

Bevorzugte Flammschutzmittel e) sind handelsübliche organische Halogenverbindungen mit Synergisten oder handelsübliche organische Stickstoffverbindungen oder organisch/anorganische Phosphorverbindungen, die einzeln oder im Gemisch miteinander eingesetzt werden, aber auch mineralische Flammschutzadditive, bevorzugt Magnesiumhydroxid oder Ca-Mg-Carbonat-Hydrate (z.B. DE-A 4 236 122).

Als organische Halogenverbindungen, insbesondere bromierte und chlorierte Verbindungen seien bevorzugt Ethylen-1,2-bistetrabromphthalimid, Decabromdiphenylethan, Tetrabrombisphenol-A-epoxyoligomer, Tetrabrombisphenol-A-oligocarbonat, Tetrachlorbisphenol-A-oligocarbonat, Polypentabrombenzylacrylat, bromiertes Polystyrol oder bromierte Polyphenylenether genannt.

Als organische/anorganische Phosphorverbindungen sind die Phosphorverbindungen gemäß WO-A 98/17720 geeignet, bevorzugt roter Phosphor, Metallphosphinate, insbesondere Aluminiumphosphinat oder Zinkphosphinat, Metallphosphonate, insbesondere Aluminiumphosphonat, Calciumphosphonat oder Zinkphosphonat, Derivate der 9,10-Dihydro-9-oxa-10-phosphaphenanthren-10-oxide (DOPO-Derivate)], Triphenylphosphat (TPP), Resorcinol-bis-(diphenylphosphat) (RDP), einschließlich Oligomere sowie Bisphenol-A-bis-diphenylphosphat (BDP) einschließlich Oligomere, ferner Zink-bis(diethylphosphinat), Aluminium-tris(diethylphosphinat), Melaminphosphat, Melaminpyrophosphat, Melaminpolyphosphat, Melamin-poly(aluminiumphosphat), Melaminpoly(zinkphosphat) oder Phenoxyphosphazenoligomere und deren Mischungen.

Als organische Stickstoffverbindungen kommen insbesondere Melamin oder Melamincyanurat, Reaktionsprodukte aus Trichlortriazin, Piperazin und Morpholin gemäß CAS-No. 1078142-02-5 (z.B. MCA PPM Triazin HF der Fa. MCA Technologies GmbH, Biel-Benken, Schweiz) in Frage.

Als Synergisten sind bevorzugt Antimonverbindungen, insbesondere Antimontrioxid oder Antimonpentoxid, Zinkverbindungen, Zinnverbindungen, insbesondere Zinkstannat oder verschiedene Borate, insbesondere Zinkborate, geeignet.

Auch können dem Flammschutzmittel sogenannte Kohlenstoffbildner und Tetrafluorethylenpolymerisate zugesetzt werden.

Unter den halogenhaltigen Flammschutzmitteln werden besonders bevorzugt bromierte Polystyrole wie z.B. Firemaster® PBS64 (Great Lakes, West Lafayette, USA), oder bromierte Phenylenether jeweils insbesondere bevorzugt in Kombination mit Antimontrioxid und/oder Zinkstannaten als Synergisten eingesetzt. Unter den halogenfreien Flammschutzmitteln werden besonders bevorzugt Aluminium-tris(diethylphosphinat) in Kombination mit Melaminpolyphosphat (z.B. Melapur® 200/70 der BASF SE, Ludwigshafen, Deutschland) und Zinkborat (z.B. Firebrake® 500 oder Firebrake® ZB der RioTinto Minerals, Greenwood Village, USA) oder Aluminium-tris(diethylphosphinat) in Kombination mit Aluminiumphosphonat und/oder Aluminiumphosphonat-hydrat eingesetzt.

Insbesondere ganz besonders bevorzugt wird als Flammschutzmittel Aluminium-tris(diethylphosphinat) (z.B. Exolit® OP1230 der Clariant International Ltd. Muttenz, Schweiz) [CAS No. 225789-38-8] in einer Kombination mit Melaminpolyphosphat [CAS No. 41583-09-9 oder CAS No. 255-449-7] (Melapur® 200/70) und Zinkborat [CAS No. 51201-70-8] (Firebrake® 500) eingesetzt.

**Komponente f)**

Übliche Additive der Komponente f) sind bevorzugt Stabilisatoren, Entformungsmittel, UV-Stabilisatoren, Gammastrahlenstabilisatoren, Laserabsorber, Antistatika, Fließhilfsmittel, Elastomermodifikatoren, Emulgatoren, Nukleierungsmittel, Säurefänger, Weichmacher, Gleitmittel, Farbstoffe, Lasermarkierungsadditive oder Pigmente. Die Additive können alleine oder in Mischung bzw. in Form von Masterbatchen eingesetzt werden.

Als Stabilisatoren werden bevorzugt Hydrochinone, aromatische sekundäre Amine, insbesondere Diphenylamine, substituierte Resorcine, Salicylate, Benzotriazole und Benzophenone, sowie verschieden substituierte Vertreter

dieser Gruppen oder deren Mischungen eingesetzt.

Bevorzugte Entformungsmittel werden ausgewählt aus der Gruppe Esterwachse, Pentaerytritoltetrastearat (PETS), langkettige Fettsäuren, Fettsäuresalze, Amidderivate, Montanwachse, niedermolekulare Polyethylen- bzw. Polypropylenwachse und Ethylen Homopolymer Wachse.

Bevorzugte langkettige Fettsäuren sind Stearinsäure oder Behensäure.

Bevorzugte Fettsäuresalze sind Ca- oder Zn-Stearat.

Bevorzugtes Amidderivat ist Ethylen-bis-stearylamid.

Bevorzugte Montanwachse sind Mischungen aus geradkettigen, gesättigten Carbonsäuren mit Kettenlängen von 28 bis 32 C-Atomen.

Als Pigmente bzw. Farbstoffe werden bevorzugt Zinksulfid, Titandioxid, Ultramarinblau, Eisenoxid, Ruß, Phthalocyanine, Chinacridone, Perylene, Nigrosin und Anthrachinone eingesetzt. Das als Pigment bevorzugt einzusetzende Titandioxid hat wiederum bevorzugt eine mittlere Teilchengröße im Bereich von 90 nm bis 2000 nm. Für das erfindungsgemäß als Pigment bevorzugt einzusetzende Titandioxid kommen Titandioxid-Pigmente in Frage, deren Grundkörper nach dem Sulfat (SP)- oder Chlorid (CP)-Verfahren hergestellt sein können und die Anatas und/oder Rutilstruktur, bevorzugt Rutilstruktur haben. Der Grundkörper muss nicht stabilisiert sein, jedoch ist eine spezielle Stabilisierung bevorzugt: beim CP-Grundkörper durch eine Al- Dotierung von 0,3-3,0 Gew.-% (gerechnet als $Al_2O_3$) und einen Sauerstoffüberschuss in der Gasphase bei der Oxidation des Titantetrachlorids zu Titandioxid von mindestens 2 %; beim SP-Grundkörper durch eine Dotierung z. B. mit Al, Sb, Nb oder Zn. Besonders bevorzugt ist eine "leichte" Stabilisierung mit Al, bzw. bei höheren Al-Dotierungsmengen eine Kompensation mit Antimon. Bei der Verwendung von Titandioxid als Weißpigment in Farben und Lacken, Kunststoffen usw. ist bekannt, dass durch UV-Absorption erzeugte unerwünschte photokatalytische Reaktionen zur Zersetzung des pigmentierten Materials führen. Dabei absorbieren Titandioxid-Pigmente im nahen ultravioletten Bereich Licht, so dass Elektron-Loch-Paare entstehen, welche hochreaktive Radikale auf der Titandioxid-Oberfläche erzeugen. Die gebildeten Radikale haben in organischen Medien einen Bindemittelabbau zur Folge. Erfindungsgemäß bevorzugt wird zur Erniedrigung der Photoaktivität des Titandioxids dieses anorganisch nachbehandelt, besonders bevorzugt mit Oxiden von Si und / oder Al und / oder Zr und / oder durch den Einsatz von Sn-Verbindungen.

Bevorzugt ist die Oberfläche von pigmentärem Titandioxid mit amorphen Auffällungen von Oxidhydraten der Verbindungen $SiO_2$ und/oder $Al_2O_3$ und/oder Zirkonoxid bedeckt. Die $Al_2O_3$-Hülle erleichtert die Pigmentdispergierung in der Polymermartrix, die $SiO_2$-Hülle erschwert den Ladungsaustausch an der Pigmentoberfläche und verhindert dadurch einen Polymerabbau.

Erfindungsgemäß wird das Titandioxid bevorzugt mit hydrophilen und/oder hydrophoben organischen Beschichtungen versehen, insbesondere mit Siloxanen oder Polyalkoholen.

Erfindungsgemäß insbesondere bevorzugt als Pigment einzusetzendes Titandioxid weist eine mittlere Teilchengröße im Bereich von 90 nm bis 2000 nm, bevorzugt im Bereich von 200 nm bis 800 nm auf. Kommerziell erhältliche Produkte sind beispielsweise Kronos® 2230, Kronos® 2225 und Kronos® vlp7000 der Fa. Kronos, Dallas, USA.

Als Nukleierungsmittel werden bevorzugt Talkum, Natrium- oder Calciumphenylphosphinat oder Siliziumdioxid eingesetzt, wobei Talkum besonders bevorzugt ist. Talkum ist ein in pulverisierter Form vorliegendes Magnesiumsilikathydrat, mit der chemischen Zusammensetzung $Mg_3[Si_4O_{10}(OH)_2]$, ([CAS No. 14807-96-6]).

Als Säurefänger werden bevorzugt Hydrotalcit, Kreide, Böhmit oder Zinkstannate eingesetzt.

Als Weichmacher werden bevorzugt Phthalsäuredioctylester, Phthalsäuredibenzylester, Phthalsäurebutylbenzylester, Kohlenwasserstofföle oder N-(n-Butyl)benzolsulfonamid eingesetzt.

Als Elastomermodifikator einzusetzendes Additiv wird bevorzugt eines oder mehrere Pfropfpolymerisat(e) E von

E.1 5 bis 95 Gew.-%, vorzugsweise 30 bis 90 Gew.-%, wenigstens eines Vinylmonomeren auf

E.2 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt < -20°C, eingesetzt.

Die Pfropfgrundlage E.2 hat im Allgemeinen eine mittlere Teilchengröße ($d_{50}$-Wert) von 0,05 bis 10 $\mu$m, vorzugsweise 0,1 bis 5 $\mu$m, besonders bevorzugt 0,2 bis 1 $\mu$m.

Monomere E.1 sind vorzugsweise Gemische aus

E.1.1 50 bis 99 Gew.-% Vinylaromaten und/oder kernsubstituierten Vinylaromaten, vorzugsweise Styrol, $\alpha$-Methylstyrol, p-Methylstyrol, p-Chlorstyrol, und/oder Methacrylsäure-($C_1$-$C_8$)-Alkylester, vorzugsweise Methylmethacrylat, Ethylmethacrylat, und

E.1.2 1 bis 50 Gew.-% Vinylcyanide, vorzugsweiseungesättigte Nitrile wie Acrylnitril und Methacrylnitril, und/oder (Meth)Acrylsäure-($C_1$-$C_8$)-Alkylester, vorzugsweise Methylmethacrylat, n-Butylacrylat, t-Butylacrylat, und/oder Derivate, vorzugsweise Anhydride und Imide, ungesättigter Carbonsäuren, vorzugsweise Maleinsäureanhydrid und N-Phenyl-Maleinimid.

Bevorzugte Monomere E.1.1 sind ausgewählt aus mindestens einem der Monomere Styrol, $\alpha$-Methylstyrol und Methylmethacrylat, bevorzugte Monomere E.1.2 sind ausgewählt aus mindestens einem der Monomere Acrylnitril, Maleinsäureanhydrid und Methylmethacrylat.

Besonders bevorzugte Monomere sind E.1.1 Styrol und E.1.2 Acrylnitril.

Für die in den Elastomermodifikatoren einzusetzenden Pfropfpolymerisate geeignete Pfropfgrundlagen E.2 sind bevorzugt Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen E.2 sind Dienkautschuke, insbesondere auf Basis von Butadien, Isopren etc., oder Gemische von Dienkautschuken oder Copolymerisate von Dienkautschuken oder deren Gemischen mit weiteren copolymerisierbaren Monomeren (z.B. gemäß E.1.1 und E.1.2), mit der Maßgabe, dass die Glasübergangstemperatur der Komponente E.2 unterhalb <10°C, vorzugsweise <0°C, besonders bevorzugt <-10°C liegt.

Besonders bevorzugt ist als Pfropfgrundlage E.2. reiner Polybutadienkautschuk.

Besonders bevorzugte Polymerisate E sind ABS-Polymerisate (Emulsions-, Masse- und Suspensions-ABS), wie sie z. B. in der DE-A 2 035 390 (=US-A 3 644 574) oder in der DE-A 2 248 242 (=GB-A 1 409 275) bzw. in Ullmann, Enzyklopädie der Technischen Chemie, Bd. 19 (1980), S. 280 ff. beschrieben sind.

Der Gelanteil der Pfropfgrundlage E.2 beträgt mindestens 30 Gew.-%, vorzugsweise mindestens 40 Gew.-% (in Toluol gemessen). ABS bedeutet Acrylnitril-Butadien-StyrolCopolymerisat mit der CAS- Nummer 9003-56-9 und ist ein synthetisches Terpolymer aus den drei unterschiedlichen Monomerarten Acrylnitril, 1,3-Butadien und Styrol. Es gehört zu den amorphen Thermoplasten. Die Mengenverhältnisse können dabei variieren von 15-35 % Acrylnitril, 5-30 % Butadien und 40-60 % Styrol.

Die Elastomermodifikatoren bzw. Pfropfcopolymerisate E werden durch radikalische Polymerisation, z.B. durch Emulsions-, Suspensions-, Lösungs- oder Massepolymerisation, vorzugsweise durch Emulsions- oder Massepolymerisation hergestellt. Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten E auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke basieren auf Propfgrundlagen E.2 die vorzugsweise Polymerisate aus Acrylsäurealkylestern, gegebenenfalls mit bis zu 40 Gew.-%, bezogen auf E.2 anderen polymerisierbaren, ethylenisch ungesättigten Monomeren sind. Zu den bevorzugten polymerisierbaren Acrylsäureestern gehören $C_1$-$C_8$-Alkylester, bevorzugt Methyl-, Ethyl-, Butyl-, n-Octyl- und 2-Ethylhexylester; Halogenalkylester, vorzugsweise Halogen-$C_1$-$C_8$-alkyl-ester, insbesondere bevorzugt Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage E.2.

Bei cyclischen vernetzenden Monomeren mit mindestens 3 ethylenisch ungesättigten Gruppen ist es vorteilhaft, die Menge auf unter 1 Gew.-% der Pfropfgrundlage E.2 zu beschränken.

Bevorzugte "andere" polymerisierbare, ethylenisch ungesättigte Monomere, die neben den Acrylsäureestern gegebenenfalls zur Herstellung der Pfropfgrundlage E.2 dienen können, sind beispielsweise Acrylnitril, Styrol, $\alpha$-Methylstyrol, Acrylamide, Vinyl-$C_1$-$C_6$-alkylether, Methylmethacrylat, Butadien. Bevorzugte Acrylatkautschuke als Pfropfgrundlage E.2 sind Emulsionspolymerisate, die einen Gelgehalt von mindestens 60 Gew.-% aufweisen.

Weitere geeignete Pfropfgrundlagen gemäß E.2 sind Silikonkautschuke mit pfropfaktiven Stellen, wie sie in den DE-A 3 704 657 (= US 4 859 740), DE-A 3 704 655 (= US 4 861 831), DE-A 3 631 540 (= US 4 806 593) und DE-A 3 631 539 (= US 4 812 515) beschrieben werden.

Unabhängig von der Komponente c) können als Additive zusätzliche Füll- und/oder Verstärkungsstoffe in den erfindungsgemäßen Zusammensetzungen enthalten sein.

Bevorzugt wird aber auch eine Mischung aus zwei oder mehr unterschiedlichen Füllstoffen und/oder Verstärkungsstoffen, insbesondere auf Basis von Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln und/oder faserförmige Füllstoffe und/oder Verstärkungsstoffen auf der Basis von Kohlenstofffasern eingesetzt.

Bevorzugt werden mineralische teilchenförmige Füllstoffe auf der Basis von Glimmer, Silikat, Quarz, Wollastonit, Kaolin, amorphe Kieselsäuren, Magnesiumcarbonat, Kreide, Feldspat oder Bariumsulfat eingesetzt. Besonders bevorzugt werden erfindungsgemäß mineralische teilchenförmige Füllstoffe auf der Basis von Wollastonit oder Kaolin eingesetzt.

Besonders bevorzugt werden ferner auch nadelförmige mineralische Füllstoffe als Additiv eingesetzt. Unter nadelförmigen mineralischen Füllstoffen wird erfindungsgemäß ein mineralischer Füllstoff mit stark ausgeprägtem nadelförmigen Charakter verstanden. Insbesondere seien nadelförmige Wollastonite genannt. Bevorzugt weist das Mineral ein Länge : Durchmesser - Verhältnis im Bereich von 2:1 bis 35:1, besonders bevorzugt im Bereich von 3:1 bis 19:1, am meisten bevorzugt im Bereich von 4:1 bis 12:1 auf. Die mittlere Teilchengröße der erfindungsgemäßen nadelförmigen Mineralien liegt bevorzugt bei kleiner 20 $\mu$m, besonders bevorzugt bei kleiner 15 $\mu$m, insbesondere bevorzugt bei kleiner 10 $\mu$m bestimmt mit einem CILAS GRANULOMETER.

Wie bereits oben bei der Komponente c) beschrieben, kann in einer bevorzugten Einsatzform auch der als Komponente f) einzusetzende Füllstoff und/oder Verstärkungsstoff oberflächenmodifiziert sein, besonders bevorzugt mit einem Haftvermittler bzw. Haftvermittlersystem, insbesondere bevorzugt auf Silanbasis. Die Vorbehandlung ist jedoch nicht unbedingt erforderlich.

Für die Ausrüstung der als Additiv einzusetzenden Füllstoffe werden die Silanverbindungen im Allgemeinen in Mengen von 0,05 bis 2 Gew.-%, vorzugsweise 0,25 bis 1,5 Gew.-% und insbesondere 0,5 bis 1 Gew.-%, bezogen auf den mineralischen Füllstoff, zur Oberflächenbeschichtung eingesetzt.

Die als Komponente f) einzusetzenden teilchenförmigen Füllstoffe können bedingt durch die Verarbeitung, vorzugsweise bereits in der Compoundierung, zur Formmasse bzw. in der späteren Verarbeitung zum Formkörper/Erzeugnis in der Formmasse bzw. im Formkörper/Erzeugnis einen kleineren d97- bzw. d50-Wert aufweisen, als die ursprünglich eingesetzten Füllstoffe.

Bei Laserabsorbern handelt es sich gemäß Kunststoffe 8, 2008, 119 - 121 um Laserlicht Absorber, bevorzugt zum Beschriften von Kunststofferzeugnissen. Bevorzugte Laserabsorber werden ausgewählt aus der Gruppe Antimontrioxid, Zinnoxid, Zinnorthophosphat, Bariumtitanat, Aluminiumoxid, Kupferhydroxyphosphat, Kupferorthophosphat, Kaliumkupferdiphosphat, Kupferhydroxid, Antimonzinnoxid, Bismuttrioxid und Antrachinon. Besonders bevorzugt sind Antimontrioxid und Antimonzinnoxid. Ganz besonders bevorzugt ist Antimontrioxid.

Der Laserabsorber, insbesondere das Antimontrioxid, kann direkt als Pulver oder in Form von Masterbatchen eingesetzt werden. Bevorzugte Masterbatche sind solche auf Basis von Polyamid oder solche auf Basis von Polybutylenterephthalat, Polyethylen, Polypropylen, Polyethylen-Polypropylen-Copolymer, Maleinsäureanhydrid-gepfropftem Polyethylen und/oder Maleinsäureanhydrid gepfropftem-Polypropylen, wobei die Polymere für den Antimontrioxid-Masterbatch einzeln oder im Gemisch eingesetzt werden können. Ganz besonders bevorzugt wird Antimontrioxid in Form eines Polyamid 6-basierten Masterbatches eingesetzt.

Der Laserabsorber kann einzeln oder als Gemisch mehrerer Laserabsorber eingesetzt werden.

Laserabsorber können Laserlicht einer bestimmten Wellenlänge absorbieren. In der Praxis liegt diese Wellenlänge zwischen 157 nm und 10,6 $\mu$m. Beispiele für Laser dieser Wellenlängen sind in WO2009/003976 A1 beschrieben. Bevorzugt werden Nd:YAG laser, mit denen Wellenlängen von 1064, 532, 355 und 266 nm realisiert werden können und $CO_2$-Laser eingesetzt.

Insbesondere bevorzugt betrifft die vorliegende Erfindung Zusammensetzungen enthaltend PA 6, triklines Aluminiumsilikat, Ethylenebis(stearylamid) [= CAS-No. 110-30-5] und $Mg_3[Si_4O_{10}(OH)_2]$.

## Verfahren

Für den Spritzguss oder für die Extrusion einzusetzende Formmassen erhält man, indem man die Komponenten a) und b) sowie gegebenenfalls c) und/oder d) und/oder e) in den angegebenen Gewichtsprozenten in wenigstens einem Mischaggregat, bevorzugt wenigstens einem Extruder, vermischt bzw. compoundiert.

Durch wenigstens einen Mischaggregatauslass, bevorzugt wenigstens einen Extruderauslass, wird dann die gemischte Zusammensetzung als Formmasse zu einem Strang ausgetragen, bis zur Granulierfähigkeit abkühlt und granuliert. Bevorzugt schließt sich an das Granulieren ein Trocknungsschritt an.

Bevorzugt erfolgt das Mischen/Compoundieren der oben gelisteten Komponenten in den angegebenen Gewichtsprozenten bei Temperaturen im Bereich von 240 bis 300°C in der Schmelze, bevorzugt in einem Extruder, besonders bevorzugt in einem Zweiwellenextruder.

In einer bevorzugten Ausführungsform wird das im Extruder anfallende Granulat, das die erfindungsgemäße Zusammensetzung enthält, bei 80°C im Trockenlufttrockner oder Vakuumtrockenschrank für ca. 2-6 h getrocknet, bevor

es dem Spritzguss oder einem Extrusionsverfahren zwecks Herstellung von Erzeugnissen unterzogen wird.

Die vorliegende Erfindung betrifft deshalb auch ein Verfahren zur Herstellung von Erzeugnissen mit erhöhten Flammschutzanforderungen, bevorzugt von Erzeugnissen für die Elektro- oder Elektronikindustrie, besonders bevorzugt von elektronischen oder elektrischen Baugruppen und Komponenten, indem man erfindungsgemäße Zusammensetzungen als Formmasse im Spritzguss oder in der Extrusion einsetzt, bevorzugt im Spritzguss.

Erfindungsgemäße Verfahren zur Herstellung von Erzeugnissen durch Extrusion oder Spritzguss arbeiten bevorzugt bei Schmelzetemperaturen im Bereich von 230 bis 330°C, besonders bevorzugt im Bereich von 240 bis 300°C, ganz besonders bevorzugt im Bereich von 250 bis 280°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar.

Bei der sequentiellen Coextrusion, einer Variante der Extrusion, werden zwei unterschiedliche Materialien in alternierender Folge hintereinander ausgestoßen. Auf diese Weise entsteht ein Vorformling mit in Extrusionsrichtung abschnittsweise unterschiedlicher Materialzusammensetzung. Es können bestimmte Artikelabschnitte durch entsprechende Materialauswahl mit spezifisch erforderlichen Eigenschaften ausgestattet werden, beispielsweise für Artikel mit weichen Enden und hartem Mittelteil oder integrierten weichen Faltenbalg-Bereichen (Thielen, Hartwig, Gust, "Blasformen von Kunststoffhohlkörpern", Carl Hanser Verlag, München 2006, Seite 127-129).

Das Verfahren des Spritzgusses zeichnet sich dadurch aus, dass der Rohstoff auf Basis einer erfindungsgemäßen Zusammensetzung, bevorzugt in Granulatform, in einem beheizten zylindrischen Hohlraum aufgeschmolzen (plastifiziert) und als Spritzmasse unter Druck in einen temperierten Hohlraum gespritzt wird. Nach dem Abkühlen (Erstarren) der Masse wird das Spritzgussteil entformt.

Man unterscheidet die Arbeitsschritte:

1. Plastifizieren / Aufschmelzen
2. Einspritzphase (Füllvorgang)
3. Nachdruckphase (wegen thermischer Kontraktion bei der Kristallisation)
4. Entformen.

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte. (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat enthaltend wenigstens die Komponenten a) und b) aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Erzeugnis gefertigt. Notwendig dazu sind immer zwei Werkzeughälften. Beim Spritzguss unterscheidet man folgende Funktionskomplexe:

- Angusssystem
- Formbildende Einsätze
- Entlüftung
- Maschinen- und Kraftaufnahme
- Entformungssystem und Bewegungsübertragung
- Temperierung

Im Gegensatz zum Spritzguss wird bei der Extrusion ein endlos geformter Kunststoffstrang enthaltend die erfindungsgemäße Zusammensetzung im Extruder eingesetzt, wobei der Extruder eine Maschine zur Herstellung thermoplastischer Formstücke ist. Man unterscheidet:

- Einschneckenextruder und Doppelschneckenextruder sowie die jeweiligen Untergruppen
- konventioneller Einschneckenextruder, förderwirksamer Einschneckenextruder,
- gegenläufiger Doppelschneckenextruder und gleichläufiger Doppelschneckenextruder.

Extrusionsanlagen bestehen aus Extruder, Werkzeug, Nachfolgeeinrichtung, Extrusionsblasformen. Extrusionsanlagen zum Herstellen von Profilen bestehen aus Extruder, Profil-Werkzeug, Kalibrierung, Kühlstrecke, Raupen- und Rollenabzug, Trennvorrichtung und Kipprinne.

Die vorliegende Erfindung betrifft folglich auch Erzeugnisse erhältlich durch Extrusion, oder Spritzguss der erfindungsgemäßen Formmassen.

**Beispiele:**

Die in Tabelle 1 genannten Komponenten wurden in einem Zweiwellenextruder des Typs ZSK 26 Compounder der Firma Coperion Werner & Pfleiderer (Stuttgart, Deutschland) bei einer Temperatur von ca. 280 °C gemischt, als Strang in ein Wasserbad ausgetragen, bis zur Granulierfähigkeit abgekühlt und granuliert. Das Granulat wurde bei 70°C im Vakuumtrockenschrank bis zur Gewichtskonstanz getrocknet.

Anschließend wurde das Granulat auf einer Spritzgieß-Maschine vom Typ Arburg A470 bei Massetemperaturen zwischen 270 und 290°C und Werkzeugtemperaturen im Bereich von 80 bis 100°C zu Prüfkörpern der Größe 80 mm • 10mm • 4mm und Rundplatten mit einem Durchmesser von 80 mm und einer Dicke von 0,75 mm bzw. 1,5 mm bzw. 3 mm verarbeitet.

Die mechanischen Eigenschaften der aus den erfindungsgemäßen Zusammensetzungen hergestellten Erzeugnisse wurden im Biegeversuch nach ISO 178 und im IZOD-Schlagversuch nach ISO180/1U bestimmt.

Die Glühdrahtbeständigkeit wurde anhand der Glühdrahtprüfung GWFI (Glow-Wire Flammability-Index) nach IEC 60695-2-12 bestimmt.

Gute mechanische Eigenschaften im Sinne der vorliegenden Erfindung zeichnen sich im Falle herzustellender Erzeugnisse insbesondere durch hohe Werte in der Biegefestigkeit aus. Die Biegefestigkeit in der technischen Mechanik ist ein Wert für eine Biegespannung in einem auf Biegung beanspruchten Bauteil, bei dessen Überschreiten das Versagen durch Bruch des Bauteils eintritt. Sie beschreibt den Widerstand eines Werkstückes, welcher seiner Durchbiegung oder seinem Bruch entgegengesetzt wird. Im Kurzeit-Biegeversuch nach ISO 178 werden balkenförmige Probekörper vorzugsweise mit den Abmessungen 80 mm · 10 mm · 4mm an den Enden auf zwei Aufleger gelegt und in der Mitte mit einem Biegestempel belastet (Bodo Carlowitz: Tabellarische Übersicht über die Prüfung von Kunststoffen, 6. Auflage, Giesel-Verlag für Publizität, 1992, S. 16-17).

Gemäß "http://de.wikipedia.org/wiki/Biegeversuch" wird das Biegemodul im 3-Punkt-Biegeversuch ermittelt, wobei eine Prüfprobe auf zwei Auflagen positioniert und in der Mitte mit einem Prüfstempel belastet wird. Dies ist wahrscheinlich die am häufigsten verwendete Form des Biegeversuches. Das Biegemodul berechnet sich bei einer Flachprobe dann wie folgt:

$$E = \frac{l_{\mathrm{v}}^3 (X_{\mathrm{H}} - X_{\mathrm{L}})}{4 D_{\mathrm{L}} b a^3}$$

wobei $E$ = Biegemodul in kN/mm$^2$; $l_v$ = Stützweite in mm; $X_H$ = Ende der Biegemodulermittlung in kN; $X_L$ = Beginn der Biegemodulermittlung in kN; $D_L$ = Durchbiegung in mm zwischen $X_H$ und $X_L$; $b$ = Probenbreite in mm; a = Probendicke in mm.

Über die thermische Eigenschaft eines Werkstoffes, der Wärmeformbeständigkeit, kann die Randfaserdehnung bestimmt werden. Die Wärmeformbeständigkeit ist ein Maß für die Temperaturbelastbarkeit von Kunststoffen. Wegen deren viskoelastischen Materialverhaltens gibt es für Kunststoffe keine streng definierte obere Einsatztemperatur, stattdessen wird eine Ersatzgröße unter definierter Last bestimmt. Dazu stehen zwei genormte Methoden zur Verfügung.

Diese in DIN EN ISO 75-1,-2,-3 (Vorläufer: DIN 53461) beschriebene Methode der Wärmeformbeständigkeitstemperatur (HDT = *heat deflection temperature*) verwendet Standardprobekörper mit rechteckigem Querschnitt, die bevorzugt flachkant einer Dreipunktbiegung bei konstanter Last ausgesetzt werden. Je nach Probekörperhöhe wird dabei zur Erzielung einer sogenannten *Randfaserspannung* $\sigma_f$ von 1,80 (Methode A), 0,45 (Methode B) oder 8,00 N/mm$^2$ (Methode C) durch Gewichtsstücke oder/und Federn eine Kraft

$$F = \frac{2\sigma_f b h^2}{3L}$$

aufgebracht.

- *b:* Probenbreite
- *h:* Probenhöhe
- *L:* Auflagerabstand

Anschließend werden die belasteten Proben einer Erwärmung mit konstanter Heizrate von 120 K/h (oder 50 K/h) ausgesetzt. Erreicht dabei die Durchbiegung der Probe eine Randfaserdehnung von 0,2 %, so ist die zugehörige Temperatur die Wärmeformbeständigkeitstemperatur HDT (engl. *heat deflection temperature* oder *heat distortion temperature*). Bei dem häufig verwendeten Verfahren HDT-A - so auch im Rahmen der vorliegenden Erfindung - beträgt die aufgebrachte Biegespannung 1,8 MPa.

Die Schlagzähigkeit nach ISO 180/1U ist ein Maß für die Fähigkeit eines Werkstoffes, Stoßenergie und Schlagenergie zu absorbieren, ohne zu brechen. Dabei bestimmen eine Vielzahl an Faktoren die Schlagfestigkeit eines Bauteils:

- Wandstärke
- Form und Größe des Bauteils
- Temperatur
- Stoßgeschwindigkeit

Gemessen wird die Schlagzähigkeit mit Hilfe eines Schlaghammers. Die Schlagzähigkeit wird berechnet als das Verhältnis aus Schlagarbeit und Probekörperquerschnitt (Maßeinheit $kJ/m^2$). Es gibt verschiedene Messmethoden, die Methoden nach Charpy oder IZOD. Bei der im Rahmen der vorliegenden Erfindung verwendeten Methode nach IZOD wird der Prüfkörper hochkant und nur einseitig eingespannt.

Die Bewertung der thermischen Stabilität, welche das Verarbeitungsfenster maßgeblich mitbestimmt, wurde mittels thermogravimetrischer Analyse (TGA) durchgeführt. Hierzu wurde die Probe in einem TGA-Gerät (Netzsch TG209 F1 Iris) mit einer Aufheizrate von 20,0 K/min an Luft erhitzt und die Massenänderung über die Temperatur aufgezeichnet. Die Temperatur, bei welcher ein kumulierter Masseverlust von 2 % auftrat, wurde als Temperatur T(Z) definiert, bei welcher eine thermische Stabilität nicht mehr in ausreichendem Maße gegeben ist.

Verwendete Materialien:

| | |
|---|---|
| Komponente a/1: | Polyamid 6 (Durethan® B29, Fa. Lanxess Deutschland GmbH, Köln, Deutschland) |
| Komponente b/1: | Kyanit, z.B. Silatherm®-T 1360-400 AST von Quarzwerke GmbH, Frechen, Deutschland |
| Komponente b/2: | Magnesiumhydroxid, z.B. Magnifin® 5HIV, Martinswerk GmbH, Bergheim, Deutschland |

Komponente f): Weitere für die Verwendung in Polyamiden gebräuchliche Additive wie zum Beispiel Entformungsmittel (insbesondere Ethylenebis(stearylamid), [CAS-No. 110-30-5], Nukleierungsmittel (z.B. auf Basis von Talkum). Art und Menge der als Komponente f) zusammengefassten Additive stimmen in Art und Menge für Beispiele und Vergleichsbeispiele überein.

Die in Tabelle 1 dargestellten Zusammensetzungen wurden alle nach der oben beschriebenen Weise verarbeitet.

**Tabelle 1:** Beispiel mit triklinem Aluminiumsilikat ohne weiteres Flammschutzmittel

| | | Bsp.1 | Vgl.1 |
|---|---|---|---|
| a/1 | [%] | 24,69 | 24,69 |
| b/1 | [%] | 75 | |
| b/2 | [%] | | 75 |
| f | [%] | 0,31 | 0,31 |
| IZOD | [kJ/m$^2$] | 23 | 10 |
| Biegefestigkeit | [Mpa] | 161 | 140 |
| Randfaserdehnung | [%] | 1,9 | 1,1 |
| GWFI (1,5mm) bei 750°C | | bestanden | bestanden |
| GWFI (3 mm) bei 960°C | | bestanden | bestanden |
| Beginn Zersetzung | [°C] | 360 | 320 |

Damit zeigen erfindungsgemäße Zusammensetzungen bzw. aus diesen erhältliche Erzeugnisse (Bsp.1) gegenüber der Variante mit einem Flammschutzmittel (hier Magnesiumhydroxid) (Vgl.1) bei vergleichbarer Glühdrahtperformance eine sehr viel höhere Zersetzungstemperatur und damit ein deutlich breiteres Verarbeitungsfenster.

Ein GWFI von 750°C erfüllt nach IEC60335-1 bereits die normativen Anforderungen für einen Einsatz als Isoliermaterial für stromführende Teile >0,5 A in beaufsichtigten Haushaltsgeräten. Dabei resultieren aus dem Einsatz von Aluminiumsilikat bei gleichem Füllstoffgehalt deutlich bessere mechanische Eigenschaften.

## Patentansprüche

**1.** Zusammensetzungen enthaltend

a) 20 bis 90 Gew.-% wenigstens eines Polyamids und
b) 10 bis 80 Gew.-% wenigstens eines elektrisch isolierenden, thermisch leitfähigen Füllstoffs aus dem Mineral Kyanit mit der chemischen Zusammensetzung $Al_2[O\ SiO_4]$
wobei die Summe aller Gewichtsprozente stets 100 ergibt und diese zusätzlich noch
e) 1 bis 40 Gew.-% wenigstens eines Flammschutzmittels enthalten, wobei die übrigen Komponenten soweit reduziert werden, dass die Summe aller Gewichtsprozente stets 100 ergibt.

**2.** Zusammensetzungen gemäß Anspruch 1, **dadurch gekennzeichnet, dass** Kyanit mit weniger als 1 Gew.-% Verunreinigungen eingesetzt wird.

**3.** Zusammensetzungen gemäß einem der Ansprüche 1 oder 2, **dadurch gekennzeichnet, dass** das Kyanit als Pulver, mit einer mittleren Partikelgröße $d_{50}$ von maximal 500 $\mu$m gemäß ASTM D 1921-89, Methode A eingesetzt wird.

**4.** Zusammensetzungen gemäß einem der Ansprüche 1 bis 3, **dadurch gekennzeichnet, dass** diese zusätzlich zu den Komponenten a) und b) und e) noch

c) 5 bis 70 Gew.-% bezogen auf die Gesamtzusammensetzung Glasfasern enthalten, wobei die übrigen Komponenten soweit reduziert werden, dass die Summe aller Gewichtsprozente stets 100 ergibt.

**5.** Zusammensetzungen gemäß Anspruch 4, **dadurch gekennzeichnet, dass** die als Komponente c) einzusetzenden Glasfasern mit einem Schlichtesystem bzw. einem Haftvermittler bzw. Haftvermittlersystem, besonders bevorzugt auf Silanbasis, ausgerüstet sind.

**6.** Zusammensetzungen gemäß einem der Ansprüche 1 bis 5, **dadurch gekennzeichnet, dass** diese zusätzlich zu den Komponenten a) bis c) und e), oder anstelle der Komponente c) noch

d) 0,01 bis 3 Gew.-% bezogen auf die Gesamtzusammensetzung wenigstens eines Thermostabilisators enthalten, wobei die Summe aller Gewichtsprozente stets 100 ergibt.

7. Zusammensetzungen gemäß Anspruch 6, **dadurch gekennzeichnet, dass** als Thermostabilisator sterisch gehinderte Phenole der Formel (II) eingesetzt werden,

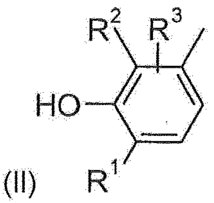

(II)

worin $R^1$ und $R^2$ für eine Alkylgruppe, für eine substituierte Alkylgruppe oder für eine substituierte Triazolgruppe stehen, wobei die Reste $R^1$ und $R^2$ gleich oder verschieden sein können und $R^3$ für eine Alkylgruppe, für eine substituierte Alkylgruppe, für eine Alkoxygruppe oder für eine substituierte Aminogruppe steht.

8. Zusammensetzungen gemäß einem der Ansprüche 1 bis 7, **dadurch gekennzeichnet, dass** als Flammschutzmittel organische Halogenverbindungen mit Synergisten oder organische Stickstoffverbindungen oder organisch/anorganische Phosphorverbindungen, einzeln oder im Gemisch miteinander eingesetzt werden.

9. Verfahren zur Herstellung einer Zusammensetzung gemäß einem der Ansprüche 1 bis 8, **dadurch gekennzeichnet, dass** die Komponenten a) und b) und e) sowie gegebenenfalls c) und/oder d) in den angegebenen Gewichtsprozenten in einem Mischwerkzeug miteinander gemischt werden.

10. Verfahren gemäß Anspruch 9, **dadurch gekennzeichnet, dass** das Mischen der Komponenten bei Temperaturen im Bereich von 240 bis 300°C in der Schmelze erfolgt.

11. Verfahren gemäß Anspruch 10, **dadurch gekennzeichnet, dass** das Mischen in einem Extruder erfolgt und die Mischung durch wenigstens einen Extruderauslass als Strang ausgetragen, bis zur Granulierfähigkeit abgekühlt und granuliert wird.

12. Formmassen erhältlich nach einem der Ansprüche 9 oder 10.

13. Granulate erhältlich nach Anspruch 11.

14. Erzeugnisse, insbesondere Halbzeuge oder Formteile, erhältlich durch Extrusion oder Spritzguss der Formmassen gemäß Anspruch 12 oder der Granulate gemäß Anspruch 13.

15. Verwendung von Zusammensetzungen gemäß einem der Ansprüche 1 bis 8 zur Herstellung von Erzeugnissen mit erhöhten Flammschutzanforderungen.

16. Verwendung gemäß Anspruch 15, **dadurch gekennzeichnet, dass** es sich um Erzeugnisse mit erhöhten Glühdrahtanforderungen handelt.

17. Verwendung gemäß Anspruch 15 oder 16, **dadurch gekennzeichnet, dass** es sich um Komponenten für strom- und spannungsführende Bauteile in Haushaltsgeräten handelt.

18. Verwendung gemäß Anspruch 17, **dadurch gekennzeichnet, dass** es sich um Komponenten ohne zusätzliche Flammschutzmittel auf Basis halogen-, stickstoff- oder phosphorhaltiger organischer Verbindungen bzw. rotem Phosphor handelt.

19. Verwendung gemäß einem der Ansprüche 15 bis 18, **dadurch gekennzeichnet, dass** die Zusammensetzungen einer Extrusion oder einem Spritzguss unterzogen werden.

## Claims

1. Composition containing

a) from 20 to 90% by weight of at least one polyamide and
b) from 10 to 80% by weight of at least one electrically insulating, thermally conductive filler consisting of the mineral kyanite having the chemical composition $Al_2[O\ SiO_4]$,

where the sum total of all the percentages by weight is always 100,
and additionally contains from 1 to 40% by weight of at least one flame retardant, where the amounts of the other components are reduced to such an extent that the sum of all percentages by weight is always 100.

2. Composition according to Claim 1, **characterized in that** kyanite having less than 1% by weight of impurities is used.

3. Composition according to either Claim 1 or 2, **characterized in that** kyanite is used as powder, preferably as powder having an average particle size $d_{50}$ of not more than 500 $\mu$m in accordance with ASTM D 1921-89, method A.

4. Composition according to any of Claims 1 to 3, **characterized in that** it contains

c) from 5 to 70% by weight, based on the total composition, of glass fibers in addition to the components a) and b), where the amounts of the other components are reduced to such an extent that the sum of all the percentages by weight is always 100.

5. Composition according to Claim 4, **characterized in that** the glass fibers to be used as component c) are provided with a size system or a bonding agent or bonding agent system, particularly preferably one based on silane.

6. Composition according to any of Claims 1 to 5, **characterized in that** it contains

d) from 0.01 to 3% by weight, based on the total composition, of at least one thermal stabilizer in addition to the components a) to c) and e) or alternatively to component c), where the sum of all percentages by weight is always 100.

7. Composition according to Claim 6, **characterized in that** the thermal stabilizer used is sterically hindered phenols of the formula (II),

(II) 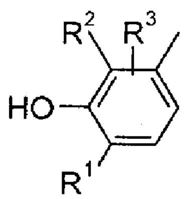

in which $R^1$ and $R^2$ are each an alkyl group, a substituted alkyl group or a substituted triazole group, where the radicals $R^1$ and $R^2$ can be identical or different, and $R^3$ is an alkyl group, a substituted alkyl group, an alkoxy group or a substituted amino group.

8. Composition according to any of Claims 1 to 7, **characterized in that** it contains as flame retardant organic halogen compounds with synergists or organic nitrogen compounds or organic/inorganic phosphorus compounds, which are used individually or in admixture with one another.

9. Process for producing a composition according to any of Claims 1 to 8, **characterized in that** the components a) and b) and e) and optionally c) and/or d) are mixed with one another in the percentages by weight indicated in a mixing apparatus.

10. Process according to Claim 9, **characterized in that** the mixing of the components is carried out at temperatures in the range from 240 to 300°C in the melt.

11. Process according to Claim 10, **characterized in that** the mixing is carried out in an extruder and the mixture is discharged as strand through at least one extruder outlet, cooled until it is pelletizable and is pelletized.

12. Molding composition obtainable according to either Claim 9 or 10.

13. Pelletized material obtainable according to Claim 11.

14. Product, in particular a semifinished part or shaped part, obtainable by extrusion or injection molding of the molding compositions according to Claim 12 or of the pellets according to Claim 13.

15. Use of compositions according to one of Claims 1 to 8 to produce products which made relatively high flame resistance requirements.

16. Use according to Claim 15, **characterized in that** it concerns products which made relatively high glow wire requirements.

17. Use according to Claim 15 or 16, **characterized in that** it concerns components for electric current- and voltage-conducting components in domestic appliances.

18. Use according to Claim 17, **characterized in that** it concerns components without additional flame retardants based on halogen-, nitrogen- or phosphorus-containing organic compounds or red phosphorus.

19. Use according to Claim 18, **characterized in that** the compositions are subjected to extrusion or injection molding.

**Revendications**

1. Compositions contenant

   a) 20 à 90% en poids d'au moins un polyamide et
   b) 10 à 80% en poids d'au moins une charge électriquement isolante, thermoconductrice constituée par le minéral kyanite présentant la composition chimique $Al_2[OSiO_4]$
   la somme de tous les pourcentages en poids valant toujours 100 et celles-ci contenant en outre encore
   e) 1 à 40% en poids d'au moins un agent ignifuge, les autres composants étant réduits de manière telle que la somme de tous les pourcentages en poids vaut toujours 100.

2. Compositions selon la revendication 1, **caractérisées en ce qu'**on utilise de la kyanite contenant moins de 1% en poids d'impuretés.

3. Compositions selon l'une quelconque des revendications 1 à 2, **caractérisées en ce que** la kyanite est utilisée sous forme de poudre, présentant une grosseur moyenne de particule $d_{50}$ d'au maximum 500 $\mu m$ selon la norme ASTM D 1921-89, méthode A.

4. Compositions selon l'une quelconque des revendications 1 à 3, **caractérisées en ce qu'**elles contiennent, en plus des composants a) et b) et e), encore

   c) 5 à 70% en poids, par rapport à la composition totale, de fibres de verre, les autres composants étant réduits de manière telle que la somme de tous les pourcentages en poids vaut toujours 100.

5. Compositions selon la revendication 4, **caractérisées en ce que** les fibres de verre à utiliser comme composant c) sont apprêtées avec un système d'ensimage ou un promoteur d'adhérence ou un système de promoteur d'adhérence, de manière particulièrement préférée à base de silane.

6. Compositions selon l'une quelconque des revendications 1 à 5, **caractérisées en ce qu'**elles contiennent, en plus des composants a) à c) et e) ou au lieu du composant c), encore

   d) 0,01 à 3% en poids, par rapport à la composition totale, d'au moins un agent de thermostabilisation, la somme de tous les pourcentages en poids valant toujours 100.

7. Compositions selon la revendication 6, **caractérisées en ce qu'**on utilise, comme agent de thermostabilisation, des phénols stériquement encombrés de formule (II),

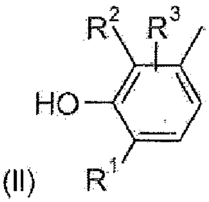

(II)

dans laquelle $R^1$ et $R^2$ représentent un groupe alkyle, un groupe alkyle substitué ou un groupe triazole substitué, les radicaux $R^1$ et $R^2$ pouvant être identiques ou différents, et $R^3$ représente un groupe alkyle, un groupe alkyle substitué, un groupe alcoxy ou un groupe amino substitué.

8. Compositions selon l'une quelconque des revendications 1 à 7, **caractérisées en ce qu'**on utilise comme agent ignifuge des composés halogénés organiques avec des agents de synergie ou des composés azotés organiques ou des composés phosphorés organiques/inorganiques, seuls ou en mélange les uns avec les autres.

9. Procédé pour la préparation d'une composition selon l'une quelconque des revendications 1 à 8, **caractérisé en ce que** les composants a) et b) et e) ainsi que le cas échéant c) et/ou d) sont mélangés les uns avec les autres aux pourcentages en poids indiqués dans un outil de mélange.

10. Procédé selon la revendication 9, **caractérisé en ce que** le mélange des composants a usuellement lieu en masse fondue à des températures dans la plage de 240°C à 300°C.

11. Procédé selon la revendication 10, **caractérisé en ce que** le mélange a lieu dans une extrudeuse et le mélange est évacué sous forme de brin via au moins une sortie d'extrudeuse, refroidi jusqu'à l'aptitude à la granulation et granulé.

12. Masses de moulage pouvant être obtenues selon l'une quelconque des revendications 9 ou 10.

13. Granulats, pouvant être obtenus selon la revendication 11.

14. Produits, en particulier produits semi-finis ou pièces moulées, pouvant être obtenu(e)s par extrusion ou moulage par injection des masses de moulage selon la revendication 12 ou des granulats selon la revendication 13.

15. Utilisation de compositions selon l'une quelconque des revendications 1 à 8 pour la préparation de produits présentant des spécifications ignifuges élevées.

16. Utilisation selon la revendication 15, **caractérisée en ce qu'**il s'agit de produits présentant des spécifications de fil incandescent élevées.

17. Utilisation selon la revendication 15 ou 16, **caractérisée en ce qu'**il s'agit d'éléments pour des pièces guidant le courant et la tension dans des appareils ménagers.

18. Utilisation selon la revendication 17, **caractérisée en ce qu'**il s'agit d'éléments sans agents ignifuges supplémentaires à base de composés organiques halogénés, azotés ou phosphorés ni de phosphore rouge.

19. Utilisation selon l'une quelconque des revendications 15 à 18, **caractérisée en ce que** les compositions sont soumises à une extrusion ou à un moulage par injection.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 2252258 A
- DE 2447727 A
- WO 2004022640 A
- DE 102011084519 A1
- DE 2702661 A
- DE 4236122 A
- WO 9817720 A
- DE 2035390 A
- US 3644574 A
- DE 2248242 A
- GB 1409275 A
- US 4937285 A
- DE 3704657 A
- US 4859740 A
- DE 3704655 A
- US 4861831 A
- DE 3631540 A
- US 4806593 A
- DE 3631539 A
- US 4812515 A
- WO 2009003976 A1


### In der Beschreibung aufgeführte Nicht-Patentliteratur


- Plastverarbeiter. 2005, 66-67
- **H. DOMININGHAUS.** Die Kunststoffe und ihre Eigenschaften. VDI-Verlag, 1976, 272 ff
- *CHEMICAL ABSTRACTS,* 1302-76-7
- *CHEMICAL ABSTRACTS,* 23128-74-7
- *CHEMICAL ABSTRACTS,* 1078142-02-5
- *CHEMICAL ABSTRACTS,* 225789-38-8
- *CHEMICAL ABSTRACTS,* 41583-09-9
- *CHEMICAL ABSTRACTS,* 255-449-7
- *CHEMICAL ABSTRACTS,* 51201-70-8
- *CHEMICAL ABSTRACTS,* 14807-96-6
- **ULLMANN.** Enzyklopädie der Technischen Chemie. 1980, vol. 19, 280 ff
- *CHEMICAL ABSTRACTS,* 9003-56-9
- *Kunststoffe,* 2008, vol. 8, 119-121
- *CHEMICAL ABSTRACTS,* 110-30-5
- **THIELEN ; HARTWIG ; GUST.** Blasformen von Kunststoffhohlkörpern. Carl Hanser Verlag, 2006, 127-129
- Bodo Carlowitz: Tabellarische Übersicht über die Prüfung von Kunststoffen. Giesel-Verlag, 1992, 16-17